# EUROPÄISCHE PATENTSCHRIFT

(11) **EP 2 408 605 B1**
(45) Veröffentlichungstag und Bekanntmachung des Hinweises auf die Patenterteilung: **24.05.2017**
(21) Anmeldenummer: 10708737.1
(22) Anmeldetag: 12.03.2010
(51) Int. Cl.: B29C 45/14

(54) **VERFAHREN ZUM DEKORIEREN VON KUNSTSTOFFTEILEN**
METHOD FOR DECORATING PLASTIC PARTS
PROCÉDÉ DE DÉCORATION DE PIÈCES EN MATIÈRE PLASTIQUE

(30) Priorität: 16.03.2009 DE 102009013065
(43) Veröffentlichungstag der Anmeldung: 25.01.2012
(73) Patentinhaber: Leonhard Kurz Stiftung & Co. KG, 90763 Fürth (DE)
(72) Erfinder: BURGER, Harald, 90480 Nürnberg (DE); HAHN, Martin, 91567 Herrieden (DE)
(74) Vertreter: Köhler, Walter
(86) Internationale Anmeldenummer: PCT/EP2010/001578
(87) Internationale Veröffentlichungsnummer: WO 2010/105780

(56) Entgegenhaltungen:
- EP-A1- 1 886 788
- DE-A1- 10 126 991
- DE-A1-102006 016 669
- FR-A1- 2 777 497
- FR-A1- 2 827 805
- JP-A- 1 067 317
- US-A- 5 154 872
- US-A- 5 593 631
- US-A1- 2008 143 017

## Beschreibung

Die Erfindung betrifft ein Verfahren zum Dekorieren von Kunststoffteilen.

Zum Dekorieren von Kunststoffteilen ist das In-Mould-Decoration-Verfahren bekannt, das sich dadurch auszeichnet, dass das Spritzen und das Dekorieren des Kunststoffteils in einem Arbeitsschritt durchführbar ist. Es können so Kunststoffteile dauerhaft dekoriert werden, gegebenenfalls auch Kunststoffteile mit unebenen Oberflächen, z.B. Strukturen, Reliefs und komplizierter Geometrie. Als In-Mould-Decoration wird ein Verfahren zum Dekorieren von Kunststoffspritzteilen bezeichnet, bei dem eine Dekorfolie in eine Spritzform eingelegt wird und sodann mit Kunststoff hinterspritzt wird. Herkömmlicherweise wird die Dekorfolie vor dem Einlegen in die Spritzform ausgestanzt und gegebenenfalls vorgeformt, wenn nicht ebene Flächen des Kunststoffspritzteils oder Teile mit komplizierten Geometrien dekoriert werden sollen. In bevorzugten Ausführungen werden nur auf die Dekorfolie aufgebrachte Schichten der Dekorfolie auf das Kunststoffspritzteil übertragen, beispielsweise ein Druckbild, also eine oder mehrere Farbschicht(en), die auf einer transparenten Schutzschicht angeordnet sein kann,wobei nach der Übertragung die Schutzschicht über der einen oder den mehreren Farbschicht(en) liegt.

In der WO 93/04837 ist ein Verfahren zur Herstellung eines mit einem Dekor einer Prägefolie dekorierten Kunststoffgegenstandes beschrieben. Ein zum Einspritzen von Kunststoff in die Form benötigter Kunststoffanguss wird vom Kunststoffgegenstand abgetrennt, bevor das Kunststoffmaterial aushärtet.

In der WO 00/30827 ist ein Verfahren beschrieben, bei dem ein Folienband bedruckt wird und durch vorherige Perforation in ablösbare Abschnitte geteilt wird. Das Folienband wird einer Spritzform zugeführt und die Abschnitte werden während des Spritzprozesses aus dem Folienband endgültig herausgetrennt.

In der FR 2 735 063 ist eine Spritzform beschrieben, die ein Schneidwerkzeug aufweist, das bei geschlossener Spritzform einen zur Dekoration benötigten Abschnitt aus einer Dekorfolie in Art eines Stanzvorgangs heraustrennt.

In der FR 2 827 805 ist ein Verfahren gemäß des Hauptanspruchs 1 der Erfindung beschrieben, bei dem ein Spalt zwischen einem ersten Werkzeugteil und einem zweiten Werkzeugteil durch die zwischengeschaltete gequetschte komprimierte Dekorfolie abgedichtet wird.

Aufgabe der vorliegenden Erfindung ist es, ein verbessertes Verfahren zur In-Mould-Decoration anzugeben.

Diese Aufgabe wird mit dem Gegenstand des Verfahrenshauptanspruchs 1 gelöst.

Bei dem Gegenstand des Verfahrenshauptanspruchs 1 handelt es sich um ein In-Mould-Decoration-Verfahren unter Einsatz einer Vorrichtung, die ein Spritzwerkzeug aufweist, umfassend ein erstes Werkzeugteil mit einer ersten Formausnehmung und ein zweites Werkzeugteil, wobei das erste oder das zweite Werkzeugteil einen Einspritzkanal aufweist und dass folgende Schritte zyklisch durchlaufen werden:
a) Bereitstellen eines Abschnitts der Dekorfolie auf dem ersten Werkzeugteil oder auf dem zweiten Werkzeugteil derart, dass bei geschlossenem Spritzwerkzeug die Dekorfolie auf einer Stirnfläche des die erste Formausnehmung begrenzenden erhabenen, die Formausnehmung umgebenden Randbereichs aufliegt;
b) Schließen des Spritzwerkzeugs soweit, dass im Bereich der Stirnfläche des erhabenen Randbereichs zwischen dem ersten Werkzeugteil und dem zweiten Werkzeugteil ein Spalt zwischen der Stirnfläche des erhabenen Randbereiches des ersten Werkzeugteils und der korrespondierenden Stirnfläche des zweiten Werkzeugteils zumindest über einen Teilbereich ausgebildet ist und der Spalt durch die zwischengeschaltete im Bereich des Spalts gequetschte komprimierte Dekorfolie abgedichtet wird;
c) Einspritzen einer Kunststoffschmelze durch den Einspritzkanal in das Spritzwerkzeug, wobei die Dekorfolie in dem von dem erhabenen Randbereich umschlossenen Bereich mit der Kunststoffschmelze hinterspritzt wird ohne Durchtritt von Kunststoffschmelze durch den abgedichteten Spalt, so dass ein dekoriertes Kunststoffteil ausgebildet wird;
d) Öffnen des Spritzwerkzeugs durch relativ voneinander Wegbewegen des ersten und des zweiten Werkzeugteils und Entnehmen des dekorierten Kunststoffteils aus dem Spritzwerkzeug;
e) Entfernen des Restabschnitts der Dekorfolie und Bereitstellen eines weiteren Abschnitts der Dekorfolie.

Dieses Verfahren gemäß dem Verfahrenshauptanspruch 1 zeichnet sich dadurch aus, dass der Werkzeugverschleiß des in die Spritzform integrierten Werkzeugs zum Durchtrennen der Dekorfolie durch Quetschen deutlich reduziert ist und gleichzeitig dadurch auch der erforderliche

Zeitaufwand pro Kunststoffspritzteil verringert ist, d.h. sich die Möglichkeit ergibt, bei der Fertigung die Taktzeit zu verkürzen und die Taktzahl zu erhöhen. Die Dekorfolie wird beim Schließen des Spritzwerkzeugs zwischen dem geschlossen verlaufenden erhabenen Randbereich des ersten Werkzeugteils und dem korrespondierenden Flächenbereich des zweiten Werkzeugteils gequetscht. Wesentlich ist, dass die beiden Werkzeugteile beim Schließen zumindest Bereichsweise einen Spalt bilden, in dem die Dekorfolie komprimiert, d.h. gequetscht wird und insbesondere aber in der Schließlage des Formwerkzeugs der Spalt durch die komprimierte Dekorfolie abgedichtet wird. Der Spalt wird hierbei so weit abgedichtet, dass beim Einspritzen der Kunststoffschmelze der Spalt dicht geschlossen ist, so dass die in das Spritzwerkzeug eingespritzte Kunststoffschmelze nicht austreten kann.

Es ist vorgesehen, dass beim Quetschen der Dekorfolie in Schritt b) die Dekorfolie auf weniger als 50 % ihrer Dicke, vorzugsweise auf 20 % bis 10 % ihrer Dicke zusammengepresst wird. Bei diesem Verfahrensschritt kann neben dem Komprimieren der Dekorfolie ein Einreißen der Dekorfolie und damit ein teilweises Durchtrennen eintreten, wobei der Grad der Durchtrennung, wie weiter oben beschrieben, materialabhängig ist. Dabei spielt die Elastizität des Materials der Dekorfolie eine wichtige Rolle, d. h. es ist möglich, dass die Dekorfolie plastisch verformt oder verdichtet wird oder dass die Dekorfolie zumindest teilweise elastisch verformt ist.

Weiter kann vorgesehen sein, dass der erhabene Randbereich des ersten

Werkzeugteils zumindest bereichsweise als Stanzkante ausgebildet ist.

In einer weiteren vorteilhaften Ausbildung kann vorgesehen sein, dass im Schritt d) die Dekorfolie auf dem durch Hinterspritzen hergestellten Kunststoffteil haftet und, soweit randseitig noch nicht vollständig durchtrennt, im Schritt d) vollständig durchtrennt wird. Wie weiter oben beschrieben, kann das vollständige Durchtrennen im Schritt d) im Wesentlichen als ein Reißvorgang beschrieben werden.

Weiter kann vorgesehen sein, dass in Schritt a) die Dekorfolie so angeordnet wird, dass ihr Dekor der in Schritt c) eingespritzten Kunststoffschmelze abgewandt ist. Durch diese Anordnung ergibt sich der Vorteil, dass das Dekor aus Materialien gebildet sein kann, die mit der Kunststoffschmelze im Schritt c) reagieren könnten, beispielsweise sich anlösen oder lösen können. Beim Einspritzen der Kunststoffschmelze in Schritt c) schützt die vergleichsweise dicke Materialschicht der Dekorfolie das Dekor.

Bei Verwenden einer zumindest teilweise und/oder bereichsweise transparenten oder transluzenten Kunststoffschmelze und einer gegen die Einwirkung der Kunststoffschmelze entsprechend gut beständigen Dekorschicht kann das Dekor auch auf der der Kunststoffschmelze zugewandten Seite der Dekorfolie angeordnet sein oder auch auf der der Kunststoffschmelze zugewandten Seite der Dekorfolie und der der Kunststoffschmelze abgewandten Seite der Dekorfolie. Damit sind zweiseitig dekorierte Kunststoffspritzteile herstellbar. Eine Seite des Kunststoffspritzteils ist dadurch direkt dekoriert, die andere Seite von der Rückseite her, wobei das rückseitige Dekor durch die gespritzte Kunststoffschicht hindurch ganz oder teilweise sichtbar sein kann.
Bei gleichzeitiger Verwendung einer transparenten Dekorfolie können auch dreidimensionale Effekte erzielt werden durch gezielte Überlagerung zweier identischer oder nahezu identischer Dekore in zwei übereinanderliegenden Ebenen auf Vorder- und Rückseite der Dekorfolie.

Es ist vorgesehen, dass als Dekorfolie eine Laminierfolie verwendet wird.

Es hat sich bewährt, dass eine einlagige Laminierfolie verwendet wird, wobei der Begriff "einlagige Laminierfolie" auf der Laminierfolie aufgebrachte Farbschichten oder Farbpigmentschichten oder eine Kleberschichten oder Schutzlackschichten oder Metallschichten oder Polymerschichten aus leitendem, halbleitendem oder nichtleitendem Polymer einschließt.

Vorzugsweise weist die einlagige Laminierfolie keine Kleberschicht auf.

Es kann vorgesehen sein, dass die Laminierfolie eine Kunststofffolie ist, vorzugsweise eine PET-Folie oder eine Folie aus Polystyrol, ABS oder PMMA. Die Kunststofffolie kann als glatte oder als strukturierte Folie ausgebildet sein. Es ist beispielsweise möglich, dass die Kunststofffolie eine Lederoberfläche nachbildet mit den typischen Ledernarben, die haptisch bzw. taktil wahrnehmbar sind. Die Strukturen können aber auch in Größenordnungen (mikroskopisch, submikroskopisch) vorhanden sein, die taktil nicht wahrnehmbar sind, z.B. optische diffraktiv oder refraktiv wirkende Strukturen.

Es kann auch vorgesehen sein, dass die Laminierfolie aus Papier ist oder Papierschichten aufweist. Wie Versuche gezeigt haben, ist auch Kopierpapier verwendbar, so dass die Art des Papiers nicht beschränkt ist. Allerdings müssen Versuche darüber entscheiden, in welcher Dicke das Papier einsetzbar ist.

Es ist auch möglich, dass die Laminierfolie ein Gewirk aus Naturfasern und/oder Kunststofffasern ist. Der Begriff "Gewirk" ist hier so verstanden, dass die Fasern ein zusammenhängendes Flächengebilde bilden, wobei der Zusammenhalt der Fasern durch Verfilzen, Verweben und/oder Verkleben hergestellt sein kann. Letztlich ist auf diese Weise auch der vorstehend genannte Werkstoff Papier herstellbar und damit Papiere aus unterschiedlichen Faserarten einsetzbar.

Weiter kann die Laminierfolie auch aus anderen Werkstoffen, insbesondere aus Naturstoffen, wie Leder, Pergament oder Holzfurnier, ausgebildet sein.

Es hat sich bewährt, dass die Laminierfolie eine Dehnbarkeit im Bereich von 12 % bis 20 % aufweist, vorzugsweise im Bereich von 15 % bis 20 %. Dabei wird die für eine gute Verarbeitbarkeit nötige Dehnbarkeit von der Oberflächengeometrie des Kunststoffspritzteils bestimmt. Je größer die Wölbung und/oder mehr Komplexität das Kunststoffspritzteil aufweist, desto mehr Dehnbarkeit ist notwendig.

Es ist vorgesehen, dass die Laminierfolie eine Dicke im Bereich von 20 µm bis 500 µm aufweist.

Es hat sich bewährt, dass der Abstand zwischen der Stirnfläche des erhabenen Randbereiches des ersten Werkzeugteils und der korrespondierenden Stirnfläche des zweiten Werkzeugteils im Bereich von 20 % bis 10 % der Dicke der Dekorfolie liegt, wie weiter oben ausgeführt.

Es hat sich bewährt, dass die in Schritt c) eingespritzte Kunststoffschmelze Polystyrol aufweist. Es ist aber auch möglich, andere thermoplastische Kunststoffe, wie z.B. ABS, ABS-PC, PMMA, PET, PET-PC zu verwenden.

Zur Durchführung des In-Mould-Decoration-Verfahrens kann eine Vorrichtung mit einem Spritzwerkzeug verwendet werden, wobei das Spritzwerkzeug ein erstes Werkzeugteil mit einer ersten Formausnehmung und ein zweites Werkzeugteil aufweist und das zweite Werkzeugteil oder das erste Werkzeugteil mindestens einen Einspritzkanal aufweist, wobei zwischen dem ersten Werkzeugteil und dem zweiten Werkzeugteil ein Abschnitt einer vorzugsweise als Endlos-Dekorfolie ausgebildeten Dekorfolie anordenbar ist, und wobei vorgesehen ist, dass die Formausnehmung des ersten Werkzeugteils einen um die Formausnehmung geschlossen verlaufenden erhabenen Randbereich mit einer im Querschnitt abgeplatteten, abgerundeten oder spitzen Stirnfläche aufweist,
dass das zweite Werkzeugteil eine zu der Stirnfläche des erhabenen Randbereichs korrespondierende Stirnfläche aufweist; und
dass bei geschlossenem Spritzwerkzeug ein Abstand zwischen der Stirnfläche des erhabenen Randbereiches des ersten Werkzeugteils und der korrespondierenden Stirnfläche des zweiten Werkzeugteils zumindest über einen Teilbereich ausgebildet ist, wobei der Abstand durch die Dekorfolie abgedichtet ist.

Die vorgeschlagene Vorrichtung zeichnet sich dadurch aus, dass der Werkzeugverschleiß des in die Spritzform integrierten Werkzeugs reduziert ist. Weil die beiden gehärteten Werkzeugteile im Bereich der Stirnfläche des geschlossen verlaufenden erhabenen Randbereichs des ersten Werkzeugteils nicht oder zumindest nicht über den gesamten umlaufenden Randbereich in Berührung kommen, wird die Standzeit des Werkzeugs erhöht. Gleichzeitig kann auch eine Verkürzung der Taktzeit und eine Erhöhung der Taktzahl beim Einsatz der Vorrichtung im Fertigungsprozess erreicht werden. Die Dekorfolie wird beim Schließen des Spritzwerkzeugs gequetscht. Wesentlich ist vielmehr, dass bei geschlossenem Spritzwerkzeug zwischen dem ersten Werkzeugteil und dem zweiten Werkzeugteil zumindest bereichsweise ein Spalt verbleibt, in dem die Dekorfolie komprimiert, d.h. gequetscht wird und der Spalt durch die darin komprimiert angeordnete Dekorfolie abgedichtet wird. Der Spalt wird hierbei so weit abgedichtet, dass beim Einspritzen der Kunststoffschmelze der Spalt dicht geschlossen ist und keine Kunststoffschmelze durch den Spalt hindurch austritt.

Bei geschlossenem Spritzwerkzeug ist die Spaltbreite, d.h. der Abstand der Stirnfläche des erhabenen Randbereichs und der korrespondierenden Stirnfläche des zweiten Werkzeugteils geringer als 50 % der Dicke der bereitgestellten Dekorfolie, vorzugsweise 20 % bis 10 % der Dicke. Vorteilhafterweise wird durch Versuche bestimmt, welcher Abstand in Abhängigkeit von dem gewählten Material der Dekorfolie und den davon abhängigen Materialeigenschaften optimal ist. Die Spaltbreite des Spritzwerkzeugs und damit die Restdicke der Dekorfolie kann so gering sein, dass die Dekorfolie nach dem Aushärten des Kunststoffspritzteils konturengetreu abtrennbar ist.

Es kann vorgesehen sein, dass die Spaltbreite im Bereich von 20 µm bis 50 µm ist. Abstände kleiner als 20 µm sind nur mit hohem Fertigungsaufwand ausführbar, wobei weiter zu berücksichtigen ist, dass sich die Werkzeugteile im Betriebseinsatz verziehen können, so dass bei deutlicher Unterschreitung des Mindestabstandes 20 µm die Werkzeugteile mindestens partiell aufeinandertreffen können.

Der um die Formausnehmung verlaufende erhabene Randbereich kann als ringförmiger Randbereich mit Kreisringform oder anders geformter geschlossener Ringform ausgebildet sein, d. h. als geschlossen verlaufender Randbereich beliebiger Umlaufkontur. Die Kreisringform ist ausgebildet, wenn das Spritzteil zumindest im Bereich der Dekorierung eine kreisförmige Außenkontur aufweist.

Es kann vorgesehen sein, dass das erste Werkzeugteil, welches die Formausnehmung aufweist, als beweglicher Formeinsatz ausgebildet ist. Die Einbauabmessungen richten sich u. a. nach den Einbaubedingungen des Spritzwerkzeugs bzw. der Spritzmaschine, wobei der bewegliche Formeinsatz vorzugsweise als ein auswechselbarer Formeinsatz ausgebildet ist.

Weiter kann vorgesehen sein, dass das zweite Werkzeugteil als fester Formeinsatz ausgebildet ist. Dieses zweite Werkzeugteil kann vorzugsweise den Einspritzkanal aufweisen. Ferner kann das zweite Werkzeugteil auch eine Formausnehmung aufweisen, die mit der ersten Formausnehmung, die im ersten Formteil ausgebildet ist, korrespondiert, d.h. bei geschlossenem Spritzwerkzeug mit der ersten Formausnehmung einen gemeinsamen Formhohlraum bildet. Die Einbauabmessungen des ersten und zweiten Werkzeugteils richten sich u. a. nach den Einbaubedingungen des Spritzwerkzeugs bzw. der Spritzmaschine, wobei der feste Formeinsatz vorzugsweise als ein auswechselbarer Formeinsatz ausgebildet ist. Einer oder beide der Formeinsätze oder das Spritzwerkzeug können einen oder mehrere Anschläge aufweisen, die beim Schließen der Formeinsätze bzw. des Spritzwerkzeugs den Abstand zwischen der Stirnfläche des erhabenen Randbereichs des ersten Werkzeugteils und der korrespondierenden Stirnfläche des zweiten Werkzeugteils einstellen. Die in das Spritzwerkzeug eingelegte Dekorfolie kann zwischen den Anschlägen hindurchgeführt sein. Es kann aber auch vorgesehen sein, die Dekorfolie zur Einstellung des Abstandes zwischen der Stirnfläche des erhabenen Randbereichs des ersten Werkzeugteils und der korrespondierenden Stirnfläche des zweiten Werkzeugteils zu nutzen, da die Flächenpressung außerhalb des Stirnflächenbereichs so klein sein kann, dass die Dekorfolie dem Schließdruck des Spritzwerkzeugs ohne merkliche Verformung widersteht.

Bei einfach konturierten Randbereichen, beispielsweise einer o. g. Kreisringform, kann der Randbereich mit der Stirnfläche als separat austauschbares Teil ausgebildet sein. Dadurch ist es möglich, bei verschlissener Stirnfläche nur diesen Teil des Formeinsatzes auszutauschen, wodurch eine Kosteneinsparung erreicht werden kann.

Das Spritzwerkzeug kann eine Vielzahl von Formeinsätzen in dem ersten und zweiten Werkzeugteil aufweisen, wobei die Formeinsätze als Paare von korrespondierenden Formeinsätzen ausgebildet sind. Die Formeinsätze können dabei alle identisch oder auch unterschiedlich sein. Die Formeinsätze können in einer Matrix angeordnet sein, z.B. als 3x3, 8x8 oder auch 7x8 oder 6x9 Formeinsätze. Einer oder mehrere dieser Formeinsätze können so ausgebildet sein, dass darin Prüfteile hergestellt werden, die speziell ausgebildet sind, um die Qualität (Registergenauigkeit des Dekors, Kanten- oder Oberflächenqualität) der mit den anderen Formeinsätzen hergestellten Teilen einschätzen zu können. Beispielsweise können diese Prüfteile ein speziell ausgebildetes Dekor aufweisen und/oder eine speziell ausgebildete Form.

Die Vorrichtung kann so ausgebildet sein, dass sie kontinuierlich betreibbar ist, indem bei bevorzugten Ausführungen vorgesehen ist, dass die Dekorfolie über eine Folientransporteinrichtung zuführbar ist und als Rollenware ausgebildet ist. Es kann, wie aus der Massenfertigung an sich bekannt, mit einem Rolle-zu-Rolle-Verfahren gearbeitet werden.

Es kann vorgesehen sein, dass die Dekorfolie eine bandförmige Endlosfolie ist, die auf einer Vorratsrolle angeordnet ist und das Spritzwerkzeug durchgreift.

Weiter kann vorgesehen sein, dass stromabwärts hinter dem Spritzwerkzeug eine Aufwickelrolle angeordnet ist, auf der die Rest-Dekorfolie aufgewickelt ist.

Die Dekorfolie und/oder die Aufwickelrolle können vorteilhafterweise mit einer Transporteinrichtung derart zusammenwirken, dass die Dekorfolie zwischen einer angetriebenen Walze und einer Andruckwalze hindurchgeführt ist und dass die Vorratsrolle abgebremst ist. Es kann weiter vorgesehen sein, dass eine zweite Transporteinrichtung für die Aufwickelrolle vorgesehen ist, vorzugsweise in dieser integriert ist, wobei die Aufwickelrolle z.B. über eine Rutschkupplung mit der zweiten Transporteinrichtung verbunden sein kann. Es ist aber auch möglich, dass lediglich die zweite Transporteinrichtung vorgesehen ist und die Vorratsrolle zur Einstallung eines Bandzugs abgebremst wird.
Es kann auch vorgesehen sein, dass die Folientransporteinrichtung und/oder die Aufwickelrolle als eine mit optischen Markierungen und/oder mechanischen Markierungen zusammenwirkende Einrichtung ausgebildet ist. Dies bedeutet, dass die Dekorfolie optische und/oder mechanische Markierungen oder Registermarken aufweist, die mit der Transporteinrichtung der Dekorfolie und/oder der Aufwickelrolle zusammenwirken. Die optischen Markierungen können beispielsweise von optischen Sensoren , welche Teil der Transporteinrichtung sind, gelesen/detektiert werden. Die mechanischen Markierungen können beispielsweise als Transportperforationen ausgebildet sein, die im Register zu einem Dekoraufdruck stehen und in die eine Zahnwalze eingreift, die mit einem Schrittantrieb zusammenwirkt. Durch die Abstimmung der Folientransporteinrichtung und/oder der Aufwickelrolle mit der Position der Formausnehmungen der Formeinsätze kann eine registergenaue Dekoration der Kunststoffspritzteile erreicht werden.

Die Erfindung wird nun anhand von Ausführungsbeispielen näher erläutert. Es zeigen
- Fig. 1: ein erfindungsgemäßes Spritzwerkzeug in der Draufsicht;
- Fig. 2: eine Schnittdarstellung des Spritzwerkzeugs in Fig. 1 längs der Schnittlinie II-II;
- Fig. 3: eine Einzelheit III in Fig. 2 in vergrößerter Darstellung;
- Fig. 4: eine perspektivische Explosivdarstellung der Vorrichtung in Fig. 1;
- Fig. 5: die Einzelheit III in Fig. 2 mit eingelegter Dekorfolie;
- Fig. 6: die Einzelheit III in Fig. 2 mit hinterspritzter Dekorfolie;
- Fig. 7: die Einzelheit III in Fig. 2 mit geöffnetem Spritzwerkzeug.

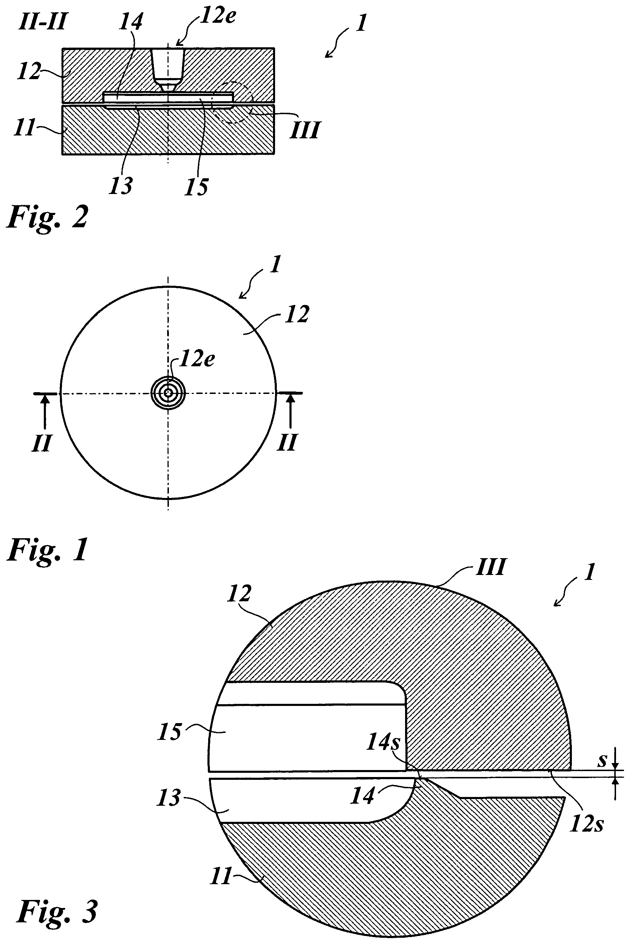

Fig. 1 zeigt ein Spritzwerkzeug 1, das in eine Vorrichtung zur Durchführung des In-Mould-Decoration-Verfahrens eingesetzt ist. Als In-Mould-Decoration wird ein Verfahren zum Dekorieren von Kunststoffspritzteilen bezeichnet, bei dem eine Dekorfolie in ein Spritzwerkzeug eingelegt wird und sodann mit Kunststoff hinterspritzt wird. Diese Definition gilt sowohl für das bei der vorliegenden Erfindung verwendete Verfahren als auch für die bekannten herkömmlichen In-Mould-Verfahren. Im Unterschied zu dem erfindungsgemäßen Verfahren wird bei dem herkömmlichen Verfahren die Dekorfolie durch miteinander kontaktierende Stanzkanten ausgestanzt und gegebenenfalls vorgeformt, wenn nicht ebene Flächen des Kunststoffspritzteils dekoriert werden sollen. In bevorzugten herkömmlichen Ausführungen mit Transferfolie werden nur Schichten der Dekorfolie auf das Kunststoffspritzteil übertragen, beispielsweise ein Druckbild, also eine oder mehrere Farbschichten, die auf einer transparenten Schutzschicht angeordnet sein kann. Dazu werden bei diesen bekannten herkömmlichen Verfahren relativ kostenaufwendige Transferfolien eingesetzt.

Von dem Spritzwerkzeug 1 sind in den Figuren lediglich die Formeinsätze dargestellt. Wie Fig. 2 zeigt, weist das Spritzwerkzeug 1 einen beweglichen Formeinsatz 11 mit einer ersten Formausnehmung 13 und einen festen Formeinsatz 12 mit einer zweiten Formausnehmung 15 auf, wobei der feste Formeinsatz 12 mit einem Einspritzkanal 12e ausgebildet ist.

Fig. 3 zeigt in einer vergrößerten Detailansicht die Ausbildung der beiden Formeinsätze 11 und 12 des Spritzwerkzeugs 1.

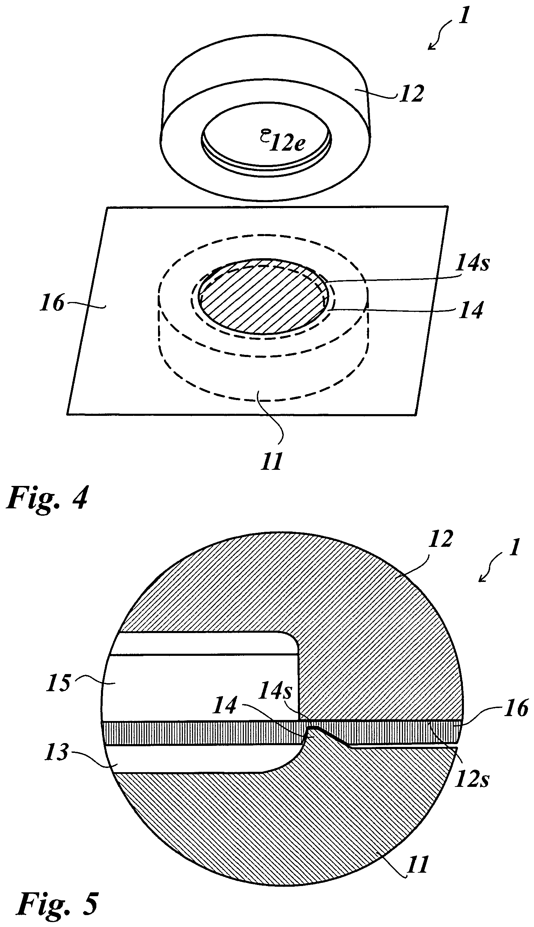

In dem beweglichen Formeinsatz 11 ist eine erste Formausnehmung 13 ausgebildet, die von einem ringförmigen Randbereich 14 begrenzt ist. Der ringförmige Randbereich 14 weist eine ebene ringförmige Stirnfläche 14s auf. In dem an den Randbereich 14 angrenzenden äußeren Randabschnitt springt die Stirnfläche der beweglichen Formhälfte 12 zurück, so dass nur die Stirnfläche 14s des Randabschnitts 14 eine Auflagefläche für die in das Spritzwerkzeug 1 eingelegte Dekorfolie 16 bildet (siehe Fig. 4).

Der feste Formeinsatz 12 weist eine ebene Stirnfläche 12s auf, die parallel zu der Stirnfläche 14s des Randabschnitts 14 des beweglichen Formeinsatzes 11 verläuft. In dem geschlossenen Spritzwerkzeug 1 verbleibt zwischen der Stirnfläche 12s und der Stirnfläche 14s ein Spalt mit einer Spaltweite s, die in dem in Fig. 3 dargestellten Ausführungsbeispiel 20 µm bis 50 µm betragen kann. Die Spaltweite s wird vorteilhafterweise so gewählt, dass sie im Bereich von 10 % bis 20 % der Dicke der unkomprimierten Dekorfolie 16 liegt. Der kleinste mögliche Wert ist durch die Fertigungstoleranzen der beiden Formeinsätze 11 und 12 bestimmt.

Fig. 4 zeigt in perspektivischer Explosivdarstellung das geöffnete Spritzwerkzeug 1 mit einem eingelegten Abschnitt der Dekorfolie 16. Der zur Dekoration benötigte Teilabschnitt der Dekorfolie 16 ist durch eine Schraffur hervorgehoben.

Die Dekorfolie 16 ist eine Endlosfolie, die auf einer Vorratsrolle bereitgestellt ist und die durch eine nicht dargestellte Transporteinrichtung zuführbar ist.

Wird nun, wie in Fig. 5 dargestellt, das Spritzwerkzeug 1 bei eingelegter Dekorfolie 16 geschlossen, indem der bewegliche Formeinsatz 11 in Richtung des festen Formeinsatzes 12 bewegt wird, wird die Dekorfolie 16 im Bereich der Stirnfläche 14s des Randbereichs 14 des beweglichen Formeinsatzes 11 gequetscht und teilweise zertrennt.

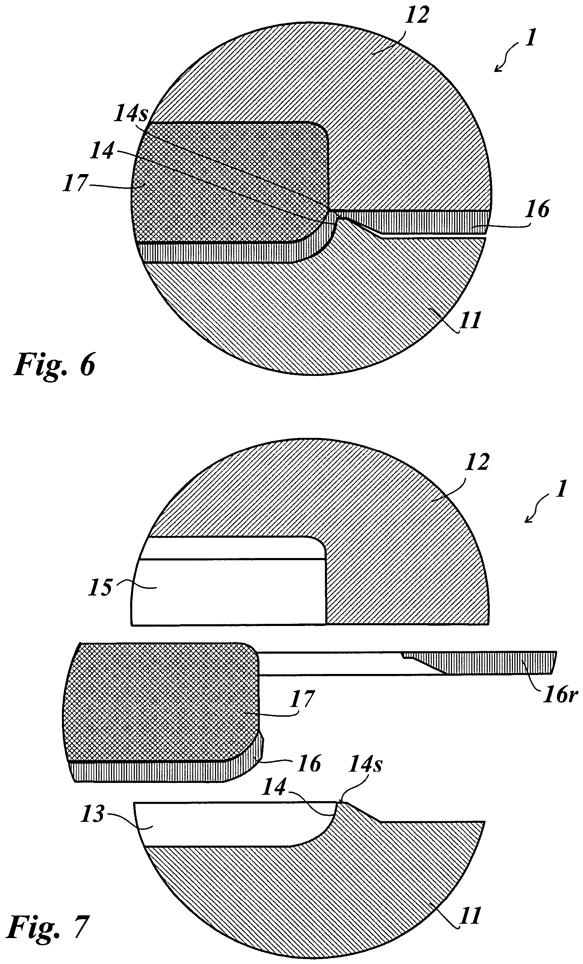

Nun wird, wie in Fig. 6 gezeigt, die Dekorfolie 16 mit einer Kunststoffschmelze 17 hinterspritzt, wobei die Dekorfolie 16 infolge des Spritzdrucks der in die zweite Formausnehmung 15 eingespritzten Kunststoffschmelze an der Innenwand der ersten Formausnehmung 13 des Spritzwerkzeugs 1 zur Anlage kommt. Wesentlich ist, dass der bei geschlossenem Werkzeug verbleibende Spalt zwischen den Formeinsätzen 11 und 12 von der zwischengeschalteten Dekorfolie abgedichtet ist, d.h. zumindest so weit dicht geschlossen ist, dass keine Kunststoffschmelze durch den Spalt austreten kann.

Die Dekorfolie 16 wird vorzugsweise jeweils so in das Spritzwerkzeug 1 eingelegt, dass die Dekorseite der eingespritzten Kunststoffschmelze 17s abgewandt ist. Bei dieser Anordnung treten keine Reaktionen der Dekorschicht mit der Kunststoffschmelze 17s ein, wie das beim herkömmlichen In-Mould-Decoration-Verfahren möglich wäre, bei der die Dekorationsschicht der Kunststoffschmelze zugewandt ist. Als Dekorfolie 16 kann vorteilhafterweise eine Laminierfolie vorgesehen sein, bei der es sich beispielsweise um eine PET-Folie handeln kann, aber auch um bedrucktes Papier, Gewirke aus Naturfasern oder Kunstfasern oder Naturwerkstoffe, wie Leder oder Pergament. Die Dicke der Laminierfolie kann im Bereich von 20 µm bis 500 µm liegen, bevorzugt ist jedoch eine Dicke, die es gestattet, die Spaltweite s des geschlossenen Spritzwerkzeugs 1 im Bereich von 10 bis 20 % der Dicke der Dekorfolie 16 einzustellen. Allerdings hat es sich in Versuchen gezeigt, dass auch Dekorfolien verarbeitet werden können, deren Dicke etwa der Spaltweite s entspricht. Ein wesentlicher Materialparameter der Dekorfolie 16 ist die Dehnbarkeit, die in Abhängigkeit von dem eingesetzten Material vorteilhafterweise im Bereich von 12 % bis 20 % liegen sollte, vorzugsweise im Bereich von 15 % bis 20 %. Für PET-Folien hat sich beispielsweise eine Dehnbarkeit von etwa 20 % bewährt.

Fig. 7 zeigt das nach dem Erkalten der eingespritzten Kunststoffschmelze 17s geöffnete Spritzwerkzeug, aus der ein Kunststoffspritzteil 17 entnehmbar ist, das mit der Dekorfolie 16 dekoriert ist. Die Dekorfolie 16 weist im Bereich der Stirnfläche 14s des ringförmigen Randbereichs 14n des beweglichen Formeinsatzes insbesondere durch das vorherige Quetschen der Dekorfolie 16 eine Sollbruchstelle auf, wodurch ein Restabschnitt 16r der Dekorfolie 16 verbleibt, der auf eine Aufwickelrolle aufgewickelt werden kann. Je nach Art der Dekoration und Ausbildung des Kunststoffspritzteils 17 können Hilfseinrichtungen vorgesehen sein, um die Dekorfolie registergenau zuzuführen und in dem Spritzwerkzeug 1 registergenau zu positionieren. Bei dem Kunststoffspritzteil 17 kann es sich beispielsweise um ein Gehäuseoberteil eines elektronischen Gerätes handeln, bei dem ein Display und Tasten dekoriert werden sollen, weshalb Lageabweichungen zwischen der Dekoration und dem Gehäuseoberteil unbedingt zu vermeiden sind. Bei dem Kunststoffspritzteil 17 kann es sich beispielsweise auch um ein Einzelteil handeln, welches Bestandteil eines aus mehreren Einzelteilen zusammengesetzten Endprodukts ist und wobei die zusammengesetzten Dekore der Einzelteile ein vorzugsweise nahezu nahtloses zusammengesetztes Gesamtdekor ergeben. Das Gesamtdekor kann beispielsweise ein Endlosdekor (z.B. ein regelmäßiges Endlosmuster oder ein unregelmäßiges Furnier) oder ein Einzelbilddekor (z.B. eine Bemalung, eine Verzierung oder ein Muster) sein.
Das Endprodukt kann beispielsweise ein Bausatz, insbesondere ein Modellbausatz, z.B. für ein Spielzeug sein. Das Einzelteil kann dabei ein Teil dieses Bausatzes sein.

### Bezugszeichenliste

- 1: Spritzwerkzeug
- 11: bewegliche Formhälfte
- 12: feste Formhälfte
- 12e: Einspritzkanal
- 12s: Stirnfläche
- 13: erste Formausnehmung
- 14: ringförmiger Randbereich
- 14s: Stirnfläche
- 15: zweite Formausnehmung
- 16: Dekorfolie
- 16r: Restabschnitt
- 17: Kunststoffspritzteil
- 17s: Kunststoffschmelze

## Patentansprüche

1. In-Mould-Decoration-Verfahren unter Einsatz einer Vorrichtung, die ein Spritzwerkzeug (1) aufweist, umfassend ein erstes Werkzeugteil (11) mit einer ersten Formausnehmung (13) und ein zweites Werkzeugteil (12), wobei das erste oder das zweite Werkzeugteil (11, 12) einen Einspritzkanal (12e) aufweist, wobei in der Vorrichtung eine Dekorfolie (16), vorzugsweise als Endlos-Dekorfolie (16) ausgebildet, eingesetzt wird,
und wobei folgende Schritte zyklisch durchlaufen werden:
a) Bereitstellen eines Abschnitts der Dekorfolie (16) auf dem ersten Werkzeugteil (11) oder auf dem zweiten Werkzeugteil (12) derart, dass bei geschlossenem Spritzwerkzeug (1) die Dekorfolie (16) auf einer Stirnfläche (14s) des die erste Formausnehmung (13) begrenzenden erhabenen, die Formausnehmung (13) umgebenden Randbereichs (14) aufliegt;
b) Schließen des Spritzwerkzeugs (1) soweit, dass im Bereich der Stirnfläche (14s) des erhabenen Randbereichs (14) zwischen dem ersten Werkzeugteil (11) und dem zweiten Werkzeugteil (12) ein Spalt zwischen der Stirnfläche (14s) des erhabenen Randbereiches (14) des ersten Werkzeugteils (11) und der korrespondierenden Stirnfläche (12s) des zweiten Werkzeugteils (12) zumindest über einen Teilbereich ausgebildet ist, und der Spalt durch die zwischengeschaltete im Bereich des Spalts gequetschte komprimierte Dekorfolie abgedichtet wird;
c) Einspritzen einer Kunststoffschmelze durch den Einspritzkanal (12e) in das Spritzwerkzeug (1), wobei die Dekorfolie (16) in dem von dem erhabenen Randbereich (14) umschlossenen Bereich mit der Kunststoffschmelze hinterspritzt wird ohne Durchtritt von Kunststoffschmelze durch den abgedichteten Spalt, so dass ein dekoriertes Kunststoffteil ausgebildet wird;
d) Öffnen des Spritzwerkzeugs (1) durch relativ voneinander Wegbewegen des ersten und des zweiten Werkzeugteils (11, 12) und Entnehmen des dekorierten Kunststoffteils aus dem Spritzwerkzeug (1);
e) Entfernen des Restabschnitts der Dekorfolie (16) und Bereitstellen eines weiteren Abschnitts der Dekorfolie (16),
**dadurch gekennzeichnet,**
**dass** bei geschlossenem Spritzwerkzeug (1) der Abstand (s) der Stirnfläche (14s) des erhabenen Randbereichs (14) und der korrespondierenden Stirnfläche (12s) des zweiten Werkzeugteils (12) geringer als 50 %, vorzugsweise 20% bis 10% der Dicke der bereitgestellten Dekorfolie (16) ist, und dass die Dekorfolie (16) als eine Laminierfolie ausgebildet ist, die eine Dicke im Bereich von 20 µm bis 500 µm aufweist.

2. Verfahren nach Anspruch 1,
**dadurch gekennzeichnet,**
**dass** in Schritt b) die Dekorfolie (16) durch Quetschen und/oder Schneiden beim Zusammenwirken des erhabenen Randbereichs (14) der Formausnehmung (13) des ersten Werkzeugteils (11) mit der korrespondierenden Stirnfläche (12s) des zweiten Werkzeugteils (12) zunächst teilweise durchtrennt wird.

3. Verfahren nach einem der Ansprüche 1 oder 2,
**dadurch gekennzeichnet,**
**dass** beim Quetschen der Dekorfolie (16) in Schritt b) die Dekorfolie auf weniger als 50 % ihrer Dicke, vorzugsweise auf 20 % bis 10 % ihrer Dicke zusammengepresst wird.

4. Verfahren nach einem der Ansprüche 1 bis 3,
**dadurch gekennzeichnet,**
**dass** der erhabene Randbereich (14) des ersten Werkzeugteils (11) zumindest bereichsweise als Stanzkante ausgebildet ist.

5. Verfahren nach einem der Ansprüche 1 bis 4,
**dadurch gekennzeichnet,**
**dass** in Schritt a) die Dekorfolie (16) so angeordnet wird, dass ihr Dekor der in Schritt c) eingespritzten Kunststoffschmelze abgewandt ist.

6. Verfahren nach einem der vorangehenden Ansprüche ,
**dadurch gekennzeichnet,**
**dass** als Laminierfolie ein Gewirk aus Naturfasern und/oder Kunststofffasern und/oder Papier verwendet wird.

7. Verfahren nach einem der vorangehenden Ansprüche,
**dadurch gekennzeichnet,**
**dass** die Laminierfolie eine Dehnbarkeit im Bereich von 12 % bis 20 % aufweist, vorzugsweise im Bereich von 15 % bis 20 %.

## Claims

1. In-mould-decoration method using an apparatus that has an injection tool (1) including a first tool portion (11) having a first mould recess (13) and a second tool portion (12), wherein the first or the second tool portion (11, 12) has an injection passage (12e), wherein a decorative film (16), preferably formed as an endless decorative film (16), is inserted in the apparatus,
and wherein the following steps are cyclically performed:
a) providing a portion of the decorative film (16) on the first tool portion (11) or on the second tool portion (12) in such a way that, when the injection tool (1) is closed, the decorative film (16) lies on an end face (14s) of the raised edge region (14) which delimits the first mould recess (13) and which extends around the mould recess (13);
b) closing the injection tool (1) to such an extent that in the region of the end face (14s) of the raised edge region (14) between the first tool portion (11) and the second tool portion (12) a gap is formed between the end face (14s) of the raised edge region (14) of the first tool portion (11) and the corresponding end face (12s) of the second tool portion (12) at least over a subregion, and the gap is sealed off by the interposed compressed decorative film which is pinched in the region of the gap;
c) injecting a plastic melt through the injection passage (12e) into the injection tool (1), wherein the plastic melt is injected behind the decorative film (16) in the region surrounded by the raised edge region (14) without plastic melt passing through the sealed gap so that a decorated plastic part is produced;
d) opening the injection tool (1) by moving the first and the second tool portions (11, 12) relatively away from each other and removing the decorated plastic part from the injection tool (1);
e) removing the residual portion of the decorative film (16) and providing a further portion of the decorative film (16),
**characterised in that**,
when the injection tool (1) is closed, the spacing (s) of the end face (14s) of the raised edge region (14) and the corresponding end face (12s) of the second tool portion (12) is less than 50%, preferably 20% to 10% of the thickness of the provided decorative film (16), and the decorative film (16) is formed as a lamination film that is of a thickness in the range of between 20µm to 500µm.

2. Method according to claim 1,
**characterised in that**,
in step b), the decorative film (16) is firstly partially severed by pinching and/or cutting upon cooperation of the raised edge region (14) of the mould recess (13) of the first tool portion (11) with the corresponding end face (12s) of the second tool portion (12).

3. Method according to one of claims 1 or 2,
**characterised in that**,
upon pinching of the decorative film (16) in step b), the decorative film is compressed to less than 50% of its thickness, preferably to 20% to 10% of its thickness.

4. Method according to one of claims 1 to 3,
**characterised in that**
the raised edge region (14) of the first tool portion (11) is at least region-wise in the form of a stamping edge.

5. Method according to one of claims 1 to 4,
**characterised in that**,
in step a), the decorative film (16) is so arranged that its decoration is remote from the plastic melt which is injected in step c).

6. Method according to one of the preceding claims,
**characterised in that**
a knitted fabric made of natural fibres and/or artificial fibres and/or paper is used as the lamination film.

7. Method according to one of the preceding claims
**characterised in that**
the laminating foil has a stretchability in the range of between 12% to 20%, preferably in the range of between 15% to 20%.

## Revendications

1. Procédé de décoration dans le moule utilisant un dispositif, qui présente un outil d'injection (1), comprenant une première partie d'outil (11) avec un premier évidement de moule (13) et une deuxième partie d'outil (12), dans lequel la première ou la deuxième partie d'outil (11, 12) présente un canal d'injection (12e), dans lequel un film décoratif (16), réalisé de préférence sous forme de film décoratif sans fin (16), est inséré dans le dispositif,
et dans lequel les étapes suivantes sont passées de manière acyclique :
a) la mise à disposition d'une section du film décoratif (16) sur la première partie d'outil (11) ou sur la deuxième partie d'outil (12), de telle sorte que lorsque l'outil d'injection (1) est fermé, le film décoratif (16) repose sur une surface avant (14s) de la zone de bord (14) entourant le premier évidement de moule (13), en relief délimitant le premier évidement de moule (13) ;
b) la fermeture de l'outil d'injection (1) jusqu'à ce que dans la zone de la surface avant (14s) de la zone de bord (14) en relief entre la première partie d'outil (11) et la deuxième partie d'outil (12), une fente soit réalisée entre la surface avant (14s) de la zone de bord (14) en relief de la première partie d'outil (11) et la surface avant correspondante (12s) de la deuxième partie d'outil (12) au moins sur une zone partielle, et la fente soit étanchéifiée par le film décoratif intercalé comprimé coincé dans la zone de la fente ;
c) l'injection d'une matière plastique en fusion par le canal d'injection (12e) dans l'outil d'injection (1), dans lequel le film décoratif (16) est contre-injecté de matière plastique en fusion dans la zone entourée par la zone de bord (14) en relief sans passage de matière plastique en fusion à travers la fente étanchéifiée, de sorte qu'une pièce en matière plastique décorée soit réalisée ;
d) l'ouverture de l'outil d'injection (1) par éloignement relatif l'une de l'autre de la première et de la deuxième partie d'outil (11, 12) et enlèvement de la pièce en matière plastique décorée de l'outil d'injection (1) ;
e) l'enlèvement de la section restante du film décoratif (16) et mise à disposition d'une autre section du film décoratif (16),
**caractérisé en ce**
**que** lorsque l'outil d'injection (1) est fermé, la distance (s) entre la surface avant (14s) de la zone de bord (14) en relief et la surface avant correspondante (12s) de la deuxième partie d'outil (12) est inférieure à 50 %, de préférence de 20 % à 10 % de l'épaisseur du film décoratif (16) mis à disposition, et
**que** le film décoratif (16) est réalisé sous forme de film de stratification, qui présente une épaisseur dans la plage de 20 µm à 500 µm.

2. Procédé selon la revendication 1,
**caractérisé en ce**
**que** dans l'étape b), le film décoratif (16) est d'abord coupé en partie par coincement et/ou coupe lors de la coopération de la zone de bord (14) en relief de l'évidement de moule (13) de la première partie d'outil (11) avec la surface avant correspondante (12s) de la deuxième partie d'outil (12).

3. Procédé selon l'une quelconque des revendications 1 ou 2,
**caractérisé en ce**
**que** lors du coincement du film décoratif (16) dans l'étape b), le film décoratif est compressé à moins de 50 % de son épaisseur, de préférence de 20 % à 10 % de son épaisseur.

4. Procédé selon l'une quelconque des revendications 1 à 3,
**caractérisé en ce**
**que** la zone de bord (14) en relief de la première partie d'outil (11) est réalisée au moins par zone sous forme de bord d'estampage.

5. Procédé selon l'une quelconque des revendications 1 à 4,
**caractérisé en ce**
**que** dans l'étape a), le film décoratif (16) est agencé de telle sorte que son décor est opposé à la matière plastique en fusion injectée dans l'étape c).

6. Procédé selon l'une quelconque des revendications précédentes,
**caractérisé en ce**
**qu'**un maillage en fibres naturelles et/ou fibres de matière plastique et/ou papier est utilisé comme film de stratification.

7. Procédé selon l'une quelconque des revendications précédentes,
**caractérisé en ce**
**que** le film de stratification présente une extensibilité dans la plage de 12 % à 20 %, de préférence dans la plage de 15 % à 20 %.
